Europäisches Patentamt

European Patent Office

Office Européen des brevets

(11) Veröffentlichungsnummer: **0 284 785 B1**

# (12) EUROPÄISCHE PATENTSCHRIFT

(45) Veröffentlichungstag der Patentschrift:
02.01.91 Patentblatt 91/01

(21) Anmeldenummer: 88102913.6

(22) Anmeldetag: 26.02.88

(51) Int. Cl.⁵: $G01M\ 3/28$

(54) Verfahren und Vorrichtung zur Dichtheitskontrolle von zwei hintereinander in einer Fluidleitung angeordneten Ventilen.

(30) Priorität: 16.03.87 DE 3708471

(43) Veröffentlichungstag der Anmeldung:
05.10.88 Patentblatt 88/40

(45) Bekanntmachung des Hinweises auf die
Patenterteilung:
02.01.91 Patentblatt 91/01

(84) Benannte Vertragsstaaten:
AT BE CH DE ES FR GB IT LI NL

(56) Entgegenhaltungen:
EP-A- 0 184 836
AT-B- 328 767
DE-A- 3 409 050
US-A- 3 358 732
US-A- 4 043 355

(73) Patentinhaber: G. Kromschröder
Aktiengesellschaft
Adolfstrasse 74 Postfach 2809
D-4500 Osnabrück (DE)

(72) Erfinder: Rolker, Jürgen, Dr.-Ing.
Haubreede 28
D-4535 Westerkappeln (DE)
Erfinder: Dörfler, Peter
Hillingsweg 12
D-4520 Melle (DE)
Erfinder: Kleine, Volker
Am Gretescher Turm 10
D-4500 Osnabrück (DE)
Erfinder: Meyknecht, Johannes
Hellingstrasse 10
D-4500 Osnabrück (DE)

(74) Vertreter: Zenz, Joachim Klaus, Dipl.-Ing. et al
Patentanwälte Zenz, Helber & Hosbach Am
Ruhrstein 1
D-4300 Essen 1 (DE)

## Beschreibung

Die Erfindung betrifft ein Verfahren zum Prüfen der Dichtheit ein Verfahren von zwei hintereinander in einer Fluidleitung angeordneten Ventilen nach dem Oberbegriff der Auspruchs 1 sowie eine Vorrichtung nach dem Oberbegriff des Anspruchs 11.

Zwei hintereinander angeordnete Ventile verwendet man aus Sicherheitsgründen insbesondere in Gasleitungen für Verbrennungseinrichtungen. Die Dichtheitsprüfung, die man zumindest vor Inbetriebnahme der Verbrennungseinrichtung, aber häufig auch nach Außerbetriebnahme durchführt, soll zeigen, wann eines der Ventile erstmalig unzulässig undicht wird. Der wirtschaftliche Aufwand für die Dichtheitsprüfung muß sich in Grenzen halten, da es andernfalls wirtschaftlich günstiger wäre, ein drittes Ventil einzubauen und die Wartungsintervalle zu verkürzen.

Bei einem in der Praxis üblichen Verfahren gattungsgemäßer Art wird der zwischen den Ventilen liegende Leitungsabschnitten erst entlüftet, und es wird sodann während einer Meßzeit der Druck im Leitungsabschnitt überwacht. Erfolgt kein unzulässiger Druckaufbau, so besitzt das stromauf gelegene Ventil einen ausreichenden Dichtheitsgrad. Anschließend wird der Leitungsabschnitt befüllt und wiederum der Druck überwacht. Erfolgt kein unzulässiger Druckabbau, so besitzt das stromab gelegene Ventil einen ausreichenden Dichtheitsgrad. Bei diesem Verfahren muß nach einem fest vorgegebenen Programmablauf vorgegangen werden, wobei immer zwei Schaltvorgänge erforderlich sind, an die sich zugehörige Meßzeiten anschließen. Das Verfahren ist also wenig flexibel und vergleichsweise zeitaufwendig.

Bei dem aus der US-A-3 358 732 bekannten Prüfverfahren sind die beiden Schaltvorgänge umgekehrt. Zunächst wird unter Arbeitsdruck im Leitungsabschnitt die Dichtheit des stromab gelegenen Ventils und des für die spätere Nulldruckprüfung notwendigen Belüftungsventils geprüft. Bei einem unzulässigen Druckabbau ist eines dieser beiden Ventile undicht. Danach wird der leitungsabschnitt durch Öffnen des Belüftungsventils auf Nulldruck gebracht und alle drei Ventile werden geschlossen. Erfolgt danach während einer vorgegebenen Zeitspanne kein unzulässiger Druckaufbau, so besitzt das stromauf gelegene Ventil einen ausreichenden Dichtheitsgrad. Es gelten für dieses bekannte Verfahren und die entsprechende Vorrichtung die gleichen Mängel wie für das in der Praxis übliche Verfahren.

Aus der DE-A-3 409 050 ist es bekannt, den zwischen den Ventilen liegenden Leitungsabschnitt mit Hilfe einer Pumpe auf einen vorgegebenen Druck zu bringen, der über dem am stromauf gelegenen Ventil anstehenden Druck liegt. Wird der vorgegebene Druck innerhalb von entsprechenden Zeitfenstern nicht erreicht, so läßt sich daraus bestimmen, welches der Ventile unzulässig undicht ist. Allerdings arbeitet dieses Verfahren nicht unter Betriebsbedingungen. Vielmehr wird das stromauf gelegene Ventil entgegen der Schließrichtung entlastet und das stromab gelegene Ventil in Schließrichtung belastet. Außerdem muß ein vergleichsweise hoher apparativer Aufwand getrieben werden, und zwar unter Anpassung der Pumpenförderleistung an unterschiedliche Ventilgrößen.

Schließlich beschreibt die DE-A-3 445 281 (EP-A2-184836) ein Verfahren, bei dem in dem zwischen den Ventilen liegenden Leitungsabschnitt ein vorgegebener Druck eingestellt wird, der unterhalb des am stromauf gelegenen Ventil anstehenden Druckes liegt. Durch Überwachung des eingestellten Druckes wird ermittelt, ob dieser unzulässig ansteigt oder unzulässig abfällt. Im erstgenannten Fall ist das stromauf gelegene Ventil undicht, im letztgenannten Fall das stromab gelegene. Dieses Verfahren läßt bezüglich seiner Sicherheit zu wünschen übrig. Denn sollte ein Defekt auftreten, der die Aufnahme oder Anzeige einer Druckänderung verhindert, so sagt das System aus, beide Ventile wären ausreichend dicht.

Der Erfindung liegt die Aufgabe zugrunde, eine Dichtheitsprüfung zu ermöglichen, welche Einfachheit im Prüfablauf und im gerätetechnischen Aufbau mit hoher Zuverlässigkeit des Prüfergebnisses verbindet.

Bei einem Verfahren der eingangs genannten Gatting besteht die lösung dieser Aufgabe erfindungsgemäß in den seinzeichnenden Merkmalen des Auspruchs 1.

Vorreichtungsmäßig besteht die lösung dieser Aufgabe in den Merkmalen des Patentanspruchs 11.

Der Erfindung liegt die Erkenntnis zugrunde, daß zu irgendeinem Zeitpunkt nach Ablauf der Wartezeit der Druckzustand in dem zwischen den Ventilen liegenden Leitungsabschnitt bereits eine logische Entscheidung ermöglicht, welches der Ventile dicht ist. Dabei wird die unwahrscheinliche Möglichkeit vernachlässigt, daß beide Ventile gleichzeitig in gleichem Ausmaße undicht werden. Kennt man das dichte Ventil, so kann sich der eigentliche Prüf- oder Meßvorgang einzig und allein auf das andere Ventil richten.

Liegt nach Ablauf der Wartezeit der Druck im Leitungsabschnitt unterhalb der vorgegebenen Druckschwelle, so ist das stromauf gelegene Ventil dicht. Über letzteres erfolgt dann ein Befüllen des Leitungsabschnitts, wobei der während der Meßzeit überwachte Druckverlauf eine Beurteilung des Dichtheitsgrades des stromab gelegenen Ventils zuläßt.

Ist hingegen nach Ablauf der Wartezeit der Druck im Leitungsabschnitt höher als die Druckschwelle, so ist das stromab gelegene Ventil dicht. Über letzteres erfolgt sodann eine Entleerung des Leitungsabschnittes, wobei der während der Meßzeit überwachte Druckverlauf eine Beurteilung des Dichtheitsgrades des stromauf gelegenen Ventils zuläßt.

In jedem Falle muß während der Meßzeit die Druckschwelle ein Mal unter Erzeugung eines entsprechenden Schaltsignals passiert werden, um das geprüfte Ventil als ausreichend dicht zu definieren. Fehlt also das Schaltsignal innerhalb der Meßzeit, so kann die Fluidleitung nicht freigegeben werden, da ein Ventil nicht ausreichend dicht ist.

Der Grenzwert der Leckrate, bei dem ein Ventil unzulässig undicht wird, hängt von der Ventilgröße ab. Bei der Erfindung kann eine entsprechende Anpassung, d.h. Vorwahl der Empfindlichkeit einzig und allein durch Einstellung der Meßzeit bewirkt werden.

Die Wartezeit wird immer so gewählt, daß der erforderliche Druckausgleich stattfinden kann, und zwar auch dann, wenn der Druck im Leitungsabschnitt aufgrund eines Druckstoßes höher ist als der am stromauf gelegenen Ventil anstehende Eingangsdruck. Wir die Prüfung vor Inbetriebnahme nach längerem Stillstand der Anlage - d.h. längere Zeit geschlossenen Ventilen -durchgeführt, so kann sofort mit der Messung begonnen werden.

Das Befüllen und Entleeren des Leitungsabschnitts über das als dicht ermittelte Ventil kann durch Öffnen dieses Ventils, vorzugsweise jedoch durch einen zugehörigen, ein Hilfsventil enthaltenden Beipaß erfolgen.

Nach einer ersten bevorzugten Ausführungsform ist das erfindungsgemäße Verfahren dadurch gekennzeichnet, daß das Entleeren bzw. Befüllen des Leitungsabschnitts mit hohem Volumen strom innerhalb einer kurzen Anfangsphase der Meßzeit erfolgt. Die Druckänderung im Leitungsabschnitt zu Beginn der Meßzeit erfolgt also sprunghaft unter Passieren der Druckschwelle. Das zu prüfende Ventil ist dann unzulässig undicht, wenn noch innerhalb der Meßzeit die Druckschwelle ein zweites Mal passiert wird.

Eine ebenfalls vorteilhafte Alternative des erfindungsgemäßen Verfahrens ist dadurch gekennzeichnet, daß das Entleeren bzw. Befüllen des Leitungsabschnitts mit begrenztem Volumenstrom erfolgt und sich über die gesamte Meßzeit erstreckt. Dabei ist es günstig, die begrenzten Volumenströme durch Drosselung der die Ventile umgehenden und die Hilfsventile enthaltenden Beipässe zu erzeugen. Sofern bei dieser Verfahrensvariante der Druck im Leitungsabschnitt die Druckschwelle nicht passiert, ist das zu prüfende Ventil unzulässig undicht. Durch die Einstellung der Drosselung kann die zulässige Leckrate und damit die Empfindlichkeit der Prüfung eingestellt werden.

Der Wert der vorgegebenen Druckschwelle liegt vorzugsweise etwa auf dem halben Wert des am stromauf gelegenen Ventils anstehenden Fluiddruckes. Dadurch wird erreicht, daß bei vorgegebener Meßzeit beide Ventile mit gleicher Empfindlichkeit vermessen werden.

Nach einem weiteren vorteilhaften Merkmal schlägt die Erfindung vor, daß der Druck im Leitungsabschnitt als Differenzdruck zu dem am stromauf gelegenen Ventil anstehenden Fluiddruck erfaßt wird. Eine Änderung des am stromauf gelegenen Ventil anstehenden Eingangsdrucks bleibt also ohne Einfluß auf die Meßverhältnisse.

Die Vorrichtung zum Prüfen der Dichtheit von zwei Ventilen ist erfindungsgemäß gekennzeichnet durch Mittel zur Aufnahme des Drucks auf der Zuströmseite stromauf des ersten Ventils, Mittel zur Aufnahme des Drucks im Leitungsabschnitt zwischen dem ersten und dem zweiten Ventil, einen Differenzdrucksensor zum Vergleich der auf der Zuströmseite und im Leitungsabschnitt aufgenommenen Drücke und zum Erzeugen eines Signals bei Erreichen einer vorgegebenen Druckdifferenzschwelle zwischen den beiden Drücken, Zeitgabemittel zum Definieren einer (Minimum-)Wartezeit und einer der Wartezeit folgenden Meßzeit und eine Entscheidungs- und Schaltlogik zum selektiven Öffnen eines Leitungsweges über eines der beiden Ventile am Ende der Wartezeit in Abhängigkeit von dem genannten Signal des Differenzdrucksensors und zur Erzeugung wenigstens einer für das Prüfergebnis repräsentativen Ausgabe. Diese für das Prüfergebnis repräsentative Ausgabe ist entweder ein Freigabesignal für die Fluidleitung oder - bei Bewertung des geprüften Ventils als unzureichend dicht - eine Störmeldung.

Die Schaltmittel des Differenzdrucksensors sind vorzugsweise mit mit Hilfsventilen gekoppelt, welche in gedrosselten, die Ventile umgehenden Beipässen angeordnet sind.

Ein besonders wichtiger Anwendungsfall für sowohl das erfindungsgemäße Verfahren als auch die zu dessen Durchführung geeignete Vorrichtung ist die automatische Dichtheitsprüfung der Gasleitungszufuhrventile für Gas-Verbrennungsanlagen. Diese Ventile werden regelmäßig vor der Inbetriebnahme der Verbrennungsanlage geprüft, wobei die Prüfung automatisch bei Einschalten des Gasfeuerungsautomaten erfolgen sollte.

Im folgenden werden in der Zeichnung schematisch dargestellte Auführungsbeispiele näher erläutert :

Fig. 1 ist eine schematische Darstellung der wesentlichen Komponenten eines Ausführungsbeispiels der erfindungsgemäßen Dichtheitsprüfvorrichtung in Zuordnung zu einer von einem Feuerungsautomaten gesteuerten Gasleitung einer Verbrennungseinrichtung ;

Fig. 1A und 1B sind Diagramme zur Erläuterung der Verfahrensführung mit Hilfe der Vorrichtung gemäß Fig. 1 ;

Fig. 2 ist eine gegenüber Fig. 1 abgewandelte Ausführungsform der Erfindung ;

Fig. 2A und 2B zeigen Diagramme entsprechend Figuren 1A und 1B für die Ausführungsform gemäß Fig. 2 ;

Fig. 3 ist eine schematische Darstellung einer Abwandlung der Ausführungsform gemäß Fig. 2;

Fig. 3A und 3B sind Diagramme ähnlich denjenigen gemäß Fig. 2A und 2B zur Erläuterung des Dichtheitsprüfverfahrens bei der Vorrichtung gemäß Fig. 3 ;

Fig. 4 ist ein gegenüber der Ausführungsform gemäß Fig. 3 abgewandeltes Ausführungsbeispiel ; und

Fig. 4A und 4B zeigen Diagramme zur Erläuterung der Verfahrensführung bei der Ausführungsform gemäß Fig. 4.

Beschrieben werden ein Verfahren und eine Vorrichtung zur Dichtheitskontrolle von zwei hintereinander in einer Gasleitung einer Verbrennungsanlage angeordneten Ventilen. In der folgenden Beschreibung werden zahlreiche spezielle Details, z.B. Angaben von Druckverhältnissen zwischen Leitungsabschnitten sowie Detailschaltungen und Wartezeiten, angegeben, um die Erfindung leichter verständlich zu machen. Es ist jedoch für den Fachmann klar, daß die Erfindung ohne diese speziellen Details realisierbar ist. In anderen Fällen sind an sich bekannte Komponenten, beispielsweise Signal-Verarbeitungsschaltungen, Schalter und Ventilausführungen oder Schaltungsfunktionen, nicht im einzelnen erläutert, um die Beschreibung nicht mit erfindungsunwesentlichen Einzelheiten zu belasten.

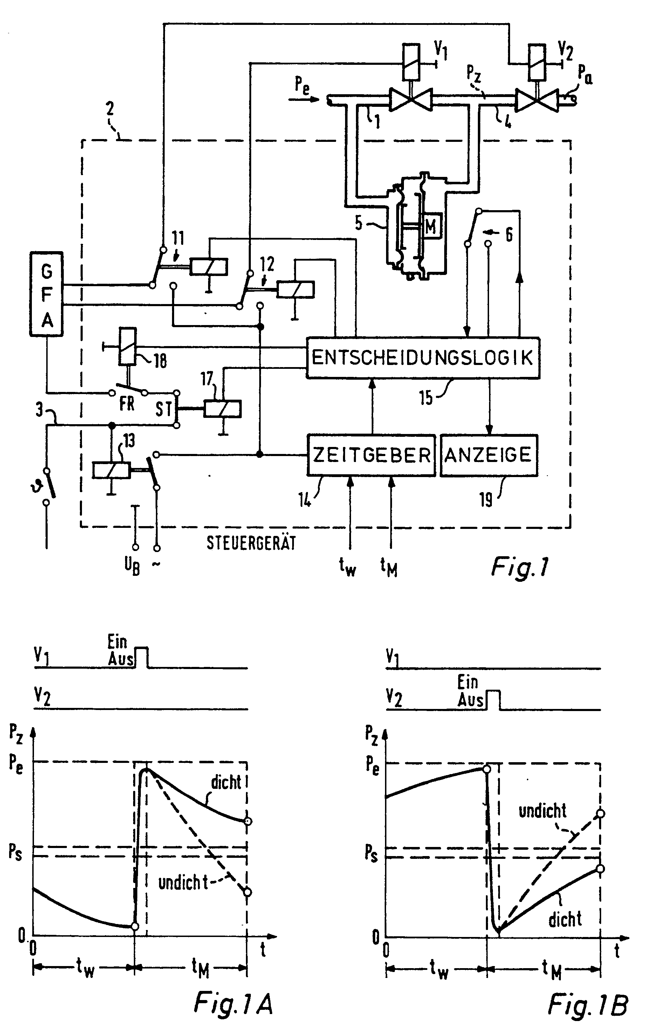

Das beschriebene Verfahren und die Vorrichtung liefern als Resultat eine Aussage darüber, ob die beiden in einer Gasleitung 1 angeordneten Ventile V1 und V2 im zulässigen Umfange dicht sind. Die Ventile V1 und V2 werden über einen Feuerungsautomaten GFA gesteuert, und zwar unter Zwischenschaltung eines Steuergeräts 2. Das Steuergerät 2 führt vor jeder Inbetriebnahme des über die Leitung 1 versorgten Brenners (Schließen des Temperaturschalters $\vartheta$) bei dem in Fig. 1 dargestellten Beispiel automatisch eine Prüfung der beiden Ventile V1 und V2 auf Dichtheit durch. Erweist sich bei dieser Prüfung eines der Ventile V1 oder V2 als undicht, so wird der in der Betriebsstromleitung 3 für den GFA angeordnete Öffner ST geöffnet ; erweisen sich nach der Prüfung beide Ventile V1 und V2 als ausreichend dicht, so bleibt ST geschlossen und der als Schließer ausgebildete Kontakt FR in der Leitung 3 wird geschlossen.

Bei der Dichtheitsprüfung wird der Druck $p_z$ im Leitungsabschnitt 4 zwischen den Ventilen V1 und V2 erfaßt, und zwar über einen Drucksensor 5, der als Differenzdrucksensor ausgebildet ist. Der Differenzdruck wird gebildet gegen den Eingangsdruck $p_e$ stromauf des Ventils V1. Der Drucksensor 5 arbeitet als Druckvergleicher und definiert eine Druckschwelle $p_s$, die vorzugsweise etwa auf der Hälfte des Eingangsdrucks $p_e$ liegt (siehe Diagramme in den Figuren 1A und 1B).

Der Drucksensor 5 arbeitet vorzugsweise berührungsfrei mit schematisch dargestellten Schaltmitteln 6 zusammen. Bei letzteren handelt es sich im dargestellten Ausführungsbeispiel um einen Reed-Kontakt, der von einem an einer Membran des Drucksensors 5 befestigten Magneten M betätigt wird. Die Schaltmittel 6 sind vorzugsweise als magnetfeldabhängiger Sensor ausgebildet, der vom Feld des Magneten M des Drucksensors beeinflußt wird.

Fig. 1 zeigt schematisch die Anlage nach Außerbetriebnahme, wobei die Schaltkontakte $\vartheta$ und FR der Betriebsstromleitung 3 des GFA offen sind. Die beiden Ventile V1 und V2, deren Erregerwicklungen über die Schaltkontakte der beiden Relais 11 und 12 mit Steuerausgängen des GFA verbunden sind, befinden sich im Ruhezustand, d.h. in ihrer Schließstellung. Bei Inbetriebnahme der Anlage durch Schließen des Schaltkontakts $\alpha$ wird ein Relais 13 im Steuergerät 2 erregt. Das Relais 13 legt über einen zugehörigen Kontakt die Betriebsspannung $U_B$ an das Steuergerät 2 und aktiviert dadurch einen Zeitgeber 14. Der Zeitgeber ist programmierbar. Bei dem beschriebenen Ausführungsbeispiel können in den Zeitgeber eine (Minimum-)Wartezeit $t_w$ und eine Meßzeit $t_M$ eingegeben werden, wobei sich bei dem hier beschriebenen Beispiel $t_M$ an $t_w$ unmittelbar anschließt. Die Wartezeit kann aber auch in anderer Weise dem Zeitgeber mitgeteilt werden. Der Zeitgeber 14 aktiviert eine Entscheidungslogik 15, die über die Schaltmittel 6 den Schaltzustand des Drucksensors 5 abfragt (im dargestellten Beispiel entsprechend der Stellung des Reed-Kontakts).

Es sei unter Bezugnahme auf Fig. 1A zunächst angenommen, daß die Entscheidungslogik 15 nach der Stellung des Schalters 6 eine erhebliche Druckdifferenz zwischen der Zuströmseite von V1 und dem Leitungsabschnitt 4 zwischen den beiden Ventilen V1 und V2 feststellt, der Druck $p_z$ also unterhalb der Druckschwelle $p_s$ liegt. Dies bedeutet, daß das Ventil V1 ausreichend dicht ist. Aufgrund dieser Feststellung gibt die Entscheidungslogik 15 an die Erregerwicklung des Relais 11 einen Steuerimpuls, wodurch der Relaiskontakt aus der in Fig. 1 dargestellten Stellung in Kontakt mit dem Betriebsspannungsanschluß $U_B$ überwechselt. Dadurch wird das Magnetventil V1 erregt und öffnet (vgl. die oberste Kurve in Fig. 1A). Der Schaltimpuls, der zum Öffnen von V1 führt, existiert nur in der Anfangsphase der Meßzeit $t_M$. Wie die in Fig. 1 A dargestellte Druck-Zeit-Kurve zeigt, reicht die kurzfristige, impulsartige Öffnung von V1 aus, um den Leitungsabschnitt 4 weitgehend mit den Eingangsdruck $p_e$ zu beaufschlagen. Die Druckschwelle $p_s$ wird innerhalb dieser Anfangsphase einmal von unten nach oben passiert. Der Druckzustand $p_z$ im Leitungsabschnitt 4 ist über den Rest der Meßzeit $t_M$ kennzeichnend für den Dichtheitsgrad des während der Meßzeit zu prüfenden Ventils V2. Sinkt der Druck $p_z$ zum Ende der Meßzeit $t_M$ unter die Druckschwelle

$p_s$, so ist das Ventil V2 unzulässig undicht. Die Entscheidungslogik 15 erfährt dies dadurch, daß die als Zweipunktregler wirkende Kombination 5, 6 ein zweites Passieren der Druckschwelle $p_s$ durch ein zweites Umschalten der Schaltmittel 6 innerhalb der Meßzeit $t_M$ signalisiert. Die Entscheidungslogik gibt dann ein Signal an ein den Öffner ST betätigendes Relais 17 und verhindert zuverlässig die Aktivierung des Gasfeuerungsautomaten GFA. Sinkt der Druck $p_z$ nach dem kurzzeitigen Öffnen innerhalb der Meßzeit nicht unter die Druckschwelle $p_s$ ab, so wird das zu prüfende Ventil V2 als dicht bewertet, und die Entscheidungslogik 15 gibt ein Signal an ein Relais 18 zur Betätigung des Freigabekontakts FR.

Nach dem Diagramm in Fig. 1B liegt der Druck $p_z$ am Ende der Wartezeit $t_w$ oberhalb der Druckschwelle $p_s$. Dies bedeutet, daß das abströmseitige Ventil V2 dicht ist. Die Entscheidungslogik gibt ein kurzzeitiges Signal auf das Relais 12, wodurch der zugehörige Relaiskontakt auf die Betriebsspannung $U_B$ umgeschaltet und das Ventil V2 entsprechend kurzzeitig geöffnet wird. Der Leitungsabschnitt 4 zwischen den Ventilen wird innerhalb der kurzen Öffnungsphase mit relativ hohem Volumenstrom entleert. Der Druck $p_z$ sinkt sprungartig entsprechend der Darstellung in Fig. 1B. Steigt der Druck $p_z$ bis zum Ende der Meßzeit wiederum bis zur oder über die Druckschwelle $p_s$, so ist das Ventil V1 unzulässig undicht. Der Störmeldungskontakt ST wird geöffnet.

Eine Anzeige 19, die von der Entscheidungslogik angesteuert wird, dient in dem dargestellten Beispiel zur Anzeige des Betriebszustandes des Steuergeräts 2 sowie des Prüfergebnisses (V1 dicht/undicht, V2 dicht/undicht). Bei dem in Fig. 1 dargestellten Beispiel ist die Anzeige fakultativ, da die Störmeldung oder Freigabe automatisch über die Kontakte ST und FR erfolgt.

Die Ausbildung der Entscheidungslogik unterliegt keinen nennenswerten Beschränkungen, sofern die vorstehend angegebenen einfachen Schaltfunktionen erfüllt werden. Da für die Ausgangssignale der Entscheidungslogik nur das Überschreiten oder Unterschreiten einer Schaltschwelle maßgeblich ist, läßt sich die Entscheidungslogik einfach und mit dem Fachmann geläufigen digitalen oder analogen Bauelementen realisieren.

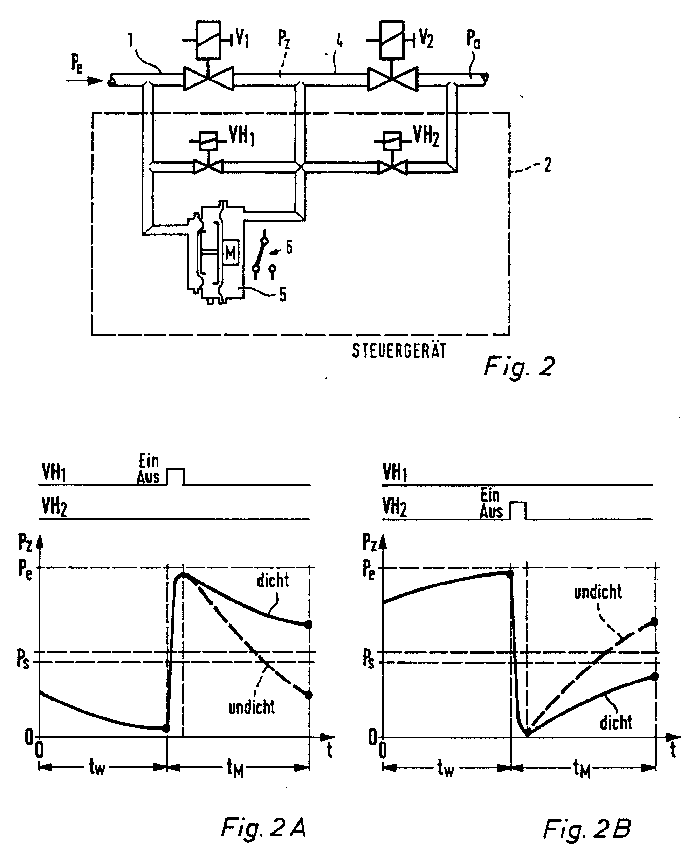

Die Anordnung nach Fig. 2 unterscheidet sich von der nach Fig. 1 dadurch, daß jedem der Ventile V1 und V2 ein zugehöriger Beipaß zugeordnet ist. der Beipaß des Ventils V1 enthält das Hilfsventil VH1, und der Beipaß des Ventils V2 enthält das Hilfsventil VH2. Hier erfolgen die Befüllung- bzw. Entleerungsvorgänge des zwischen den Ventilen V1 und V2 liegenden Leitungsabschnittes 4 über Hilfsventile VH1 bzw. VH2. Die Schaltungsanordnung des Steuergeräts 2 stimmt mit derjenigen bei dem Ausführungsbeispiel gemäß Fig. 1 überein, mit der Ausnahme, daß zum Öffnen der Leitungswege über die Ventile V1 bzw. V2 Stromimpulse von der Entscheidungslogik nicht an die Relais 11 und 12, sondern an die Erregerwicklungen der Hilfsventile VH1 bzw. VH2 angelegt werden. Die Arbeitsweise und Verfahrensführung sowie die Entscheidungskriterien für die Störmeldung oder die Freigabe stimmen mit denjenigen gemäß Fig. 1 überein, wie sich auch aus einem Vergleich der Diagramme gemäß Fig. 2A und 2B mit den Fig. 1A und 1B ergibt.

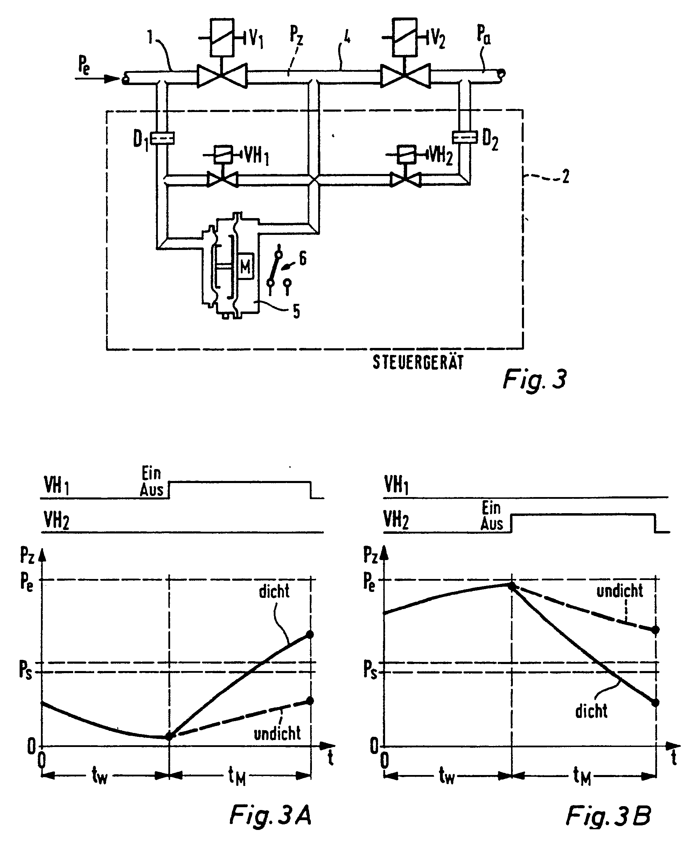

Bei dem in Fig. 3 ebenfalls vereinfacht dargestellten Ausführungsbeispiel sind in den Beipaßleitungen zu den Ventilen V1 und V2 in Reihe mit den zugehörigen Hilfsventilen VH1 bzw. VH2 Drosseln D1 bzw. D2 angeordnet. Dieser Ausführungsform ist im Verlauf der Meßzeit $t_M$ auch eine andere Verfahrensführung zugeordnet.

Entsprechend den vorhergehenden Ausführungsbeispielen wird zu Beginn der Meßzeit $t_M$ ein Strömungsweg über dasjenige Ventil V1 oder V2 geöffnet, das sich aufgrund des Druckzustandes des Leitungsabschnitts 4 (unterhalb oder oberhalb der Druckschwelle $p_s$) bereits am Ende der Wartezeit als dicht erwiesen hat. Nach dem Diagramm gemäß Fig. 3A ist V1 als dicht bewertet und V2 auf Dichtheit innerhalb der Meßzeit $t_M$ zu prüfen. Das Befüllen des zwischen den Ventilen V1 und V2 liegenden Leitungsabschnitts erfolgt ab Beginn der Meßzeit $t_M$ über die Drossel D1 mit begrenztem Volumenstrom. Letzterer wird in Abhängigkeit davon eingestellt, von welcher Leckmenge ab das Ventil V2 als unzulässig undicht anzusehen ist. Tritt diese Leckmenge auf, so kann der Druck $p_z$ die Druckschwelle $v_s$ innerhalb der Meßzeit $t_M$ nicht mehr erreichen. Wird hingegen die Druckschwelle entsprechend Darstellung in Fig. 3A in der Meßzeit $T_M$ passiert, so gilt auch das in der Meßzeit $t_M$ geprüfte Ventil V2 als dicht.

In dem in Fig. 3B dargestellten Falle zeigt der Druck $p_z$ am Ende der Wartezeit $t_w$, daß das Ventil V2 dicht ist. Über das Hilfsventil VH2 und die Drossel D2 erfolgt ab Beginn der Meßzeit $t_M$ die Entleerung des Leitungsabschnitts 4 zwischen den Ventilen V1 und V2, und zwar mit begrenztem Volumenstrom. Die Einstellung der Drossel D2 definiert diejenige Leckmengengrenze, von der ab das Ventil V1 unzulässig undicht ist. Ist letzteres der Fall, so kann der Druck $p_z$ während der Meßzeit $T_M$ nicht unter die Druckschwelle $p_s$ absinken (da es einen unzulässig hohen Volumenstrom von der Hochdruckseite $p_e$ über das Ventil V2 in den Leitungsabschnitt 4 gibt).

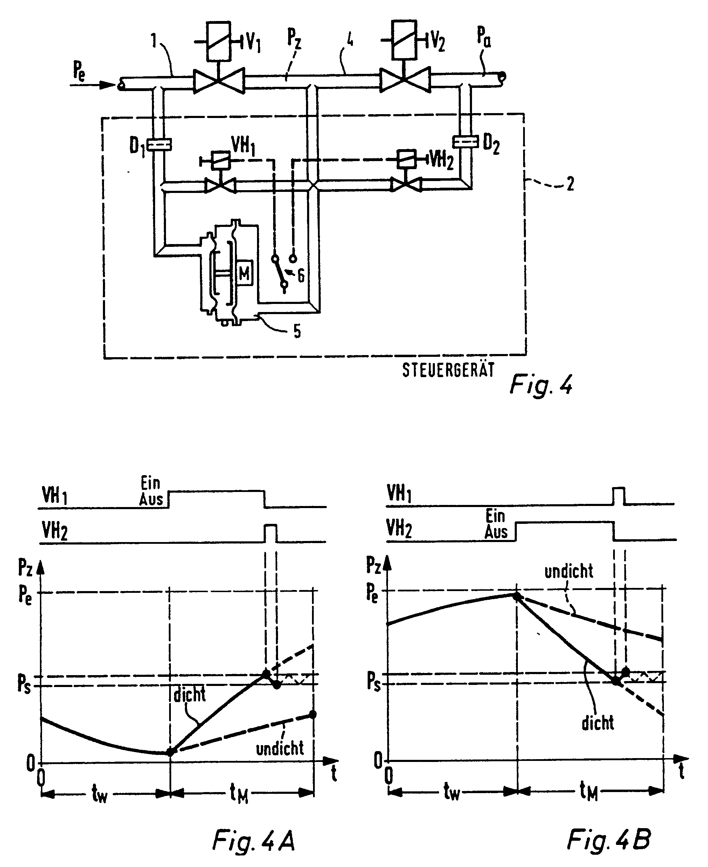

Bei der Anordnung gemäß Fig. 4 erfolgen die Befüllungs- und Entleerungsvorgänge des zwischen den Ventilen V1 und V2 liegenden Leitungsabschnitts 4 ebenfalls mit begrenztem Volumenstrom. Insoweit entspricht die Arbeitsweise der Anordnung gemäß Fig. 4 derjenigen gemäß Fig. 3.

Im Unterschied zu Fig. 3 sind die vom Drucksensor 5 betätigten Schaltmittel 6 direkt mit den Hilfsventilen VH1 und VH2 gekoppelt. Der Druck $p_z$ am Ende der Wartezeit $t_w$ bestimmt daher, ob das Ventil VH1 oder VH2 geöffnet wird. Bei Erreichen der Druckschwelle $p_s$ erfolgt ein Umschalten auf das vorher nicht betätigte Hilfsventil. Dies ermöglicht eine Überprüfung der Funktionsfähigkeit der Schaltmittel des Steuergeräts 2.

Die Wartezeit $t_w$ muß mindestens so lang bemessen werden, daß sich aus dem Druckzustand $p_z$ (oberhalb oder unterhalb der Druckschwelle) das Ventil V1 oder V2 mit dem besseren Dichtheitsgrad feststellen läßt. Wesentlich ist daher nur eine Mindestwartezeit, eine obere Begrenzung der Wartezeit ist unnötig.

**Ansprüche**

1. Verfahren zum Prüfen der Dichtheit von zwei Ventilen, (V1,V2) die mit Abstand hintereinander in einer Fluidleitung (1) angeordnet sind, wobei ein Druckgefälle in der Fluidleitung derart aufgebaut wird, daß ein erstes (V1) der beiden Ventile ein zuströmseitiges Ventil und ein zweites Ventil (V2) ein abströmseitiges Ventil bildet, wobei die beiden Ventile geschlossen werden und der Druckzustand in dem zwischen den Ventilen liegenden Leitungsabschnitt (4) erfaß wird, **gekennzeichnet durch**

Voreinstellen einer Druckschwelle, die in einem Druckbereich zwischen den auf der Zuströmseite des ersten Ventils und der Abströmseite des zweiten Ventils herrschenden Drücken liegt;

Verleichen des Drucks im Leitungsabschnitt zwischen den beiden Ventilen mit der genannten Druckschwelle;

Bewerten des ersten Ventils als im wesentlichen dicht, wenn der erfaßte Druck nach Ablauf einer Wartezeit $(t_w)$ unterhalb genannter Druckschwelle liegt, oder Bewerten des zweiten Ventils als im wesentlichen dicht, wenn der erfaße Druck nach Ablauf der Wartezeit oberhalb der Druckschwelle liegt;

Öffnen eines Leitungsweges über das als dicht bewertete Ventil so, daß sich der Druck in genanntem leitungsabschnitt ändern kann;

Erfassen des Drucks im leitungsabschnitt und Vergleich mit der Druckschwelle, wobei das noch zu prüfende ventil dann als ausreichend dicht bewertet wird, wenn der Druck im Verlauf einer Meßzeit, $(t_M)$ die mit dem Öffnen des Leitungsweges beginnt, die Druckschwelle ein einziges Mal passiert oder erreicht.

2. Verfahren nach Anspruch 1, dadurch gekennzeichnet, daß die Druckschwelle mit Bezug auf den zuströmseitigen Fluiddruck vor dem ersten Ventil eingestellt wird.

3. Verfahren nach Anspruch 1 oder 2, dadurch gekennzeichnet, daß beim Öffnen des Leitungsweges ein so hoher Volumenstrom zugelassen wird, daß der Druck in genanntem Leitungsabschnitt bereits in einer vergleichsweise kurzen Anfangsphase der Meßzeit die Druckschwelle passiert, und daß der Dichtheitsgrad des zu prüfenden Ventils in Abhängigkeit davon beurteilt wird, ob innerhalb der Meßzeit der Druck im Leitungsabschnitt die Druckschwelle ein zweites Mal erreicht.

4. Verfahren nach Anspruch 3, dadurch gekennzeichnet, daß genannter Leitungsweg durch die Fluidleitung verläuft und durch Betätigen des als dicht bewerteten Ventils geöffnet und geschlossen wird.

5. Verfahren nach einem der Ansprüche 1 bis 3, dadurch gekennzeichnet, daß genannter Leitungsweg über das als dicht bewertete Ventil durch einen zugehörigen, ein Hilfsventil enthaltenden Beipaß geöffnet wird.

6. Verfahren nach Anspruch 5, dadurch gekennzeichnet, daß der Leitungsweg bei Beginn der Meßzeit mit begrenztem Volumenstrom geöffnet und über die gesamte Meßzeit offengehalten wird.

7. Verfahren nach Anspruch 6, dadurch gekennzeichnet, daß der Volumenstrom jeweils durch Drosselung der die ersten und zweiten Ventile umgehenden und die Hilfsventile enthaltenden Beipässe begrenzt wird.

8. Verfahren nach einem der Ansprüche 1 bis 7, dadurch gekennzeichnet, daß bei jedem Erreichen der Druckschwelle von einem Schwellwertgeber ein Schaltsignal erzeugt wird, jedes Schaltsignal zu einer Entscheidungslogik übertragen und gezählt wird und eine Störung gemeldet wird, wenn die Schaltsignalzahl am Ende der Meßzeit ungleich Eins ist.

9. Verfahren nach Anspruch 8, dadurch gekennzeichnet, daß wenigstens eine der Warte- und Meßzeiten an einem Zeitgeber eingestellt wird und der Zeitgeber am Ende der Warte- und Meßzeiten einen Schaltimpuls zur Aktivierung der Entscheidungslogik abgibt.

10. Verfahren nach einem der Ansprüche 1 bis 9, dadurch gekennzeichnet, daß die Meßzeit entsprechend der Größe und/oder Leistung der zu prüfenden Ventile voreingestellt wird.

11. Vorrichtung zum Prüfen der Dichtheit von zwei Ventilen, (V1, V2) die mit Abstand hintereinander in einer Fluidleitung (1) angeordnet sind, wobei die Fluidleitung eine Zuströmseite stromauf eines ersten Ventils (V1), einen Leitungsabschnitt (4) zwischen dem ersten und dem zweiten Ventil und eine Abströmseite stromab des zweiten Ventils (V2) hat und wobei erste Mittel (V1 ;VH1) zum Öffnen und Schließen eines ersten Leitungsweges zwischen der Zuströmseite und genanntem Leitungabschnitt (4), zweite Mittel (V2 ;VH2) zum Öffnen und Schließen eines zweiten Leitungsweges zwischen genanntem Leitungsabschnitt (4) und der Abströmseite, Mittel (15,11,12) zum Betätigen der genannten Öffnungs- und Schliemßittel ; und Mittel zur Aufnahme des Drucks (pz) in genanntem Leitungsabschnitt (4) vorgesehen sind, **gekennzeichnet durch**

Mittel zur Aufnahme des Drucks (pe) auf der Zuströmseite ;

Mittel (5) zum Vergleich der auf der Zuströmseite und im genannten Leitungsabschnitt aufgenommenen beiden Drücke, und zum Erzeugen wenigstens eines Signals bei Erreichen einer vorgegebenen Druckdifferenzschwelle zwischen den beiden Drücken, wobei die Vergleichsmittel mit den Aufnahmemitteln verbunden sind ;

Zeitgabemittel (14) zum Definieren wenigstens einer einer Wartezeit (tw) folgenden Meßzeit (tm) ; und Entscheidungs- und Schaltmittel (6,15) zum selektiven Schalten eines der beiden Betätigungsmittel am Ende der Wartezeit (tw) in Abhängigkeit von dem genannten Signal der Vergleichsmittel (5) und zur Erzeugung wenigstens einer für das Prüfergebnis repräsentativen Ausgabe, wobei genannte Entscheidungs- und Schaltmittel mit den Vergleichsmitteln (5), den Zeitgabemitteln (14) und den Betätigungsmitteln (11,12) gekoppelt sind.

12. Vorrichtung nach Anspruch 11, dadurch gekennzeichnet, daß die ersten und zweiten Leitungswege in der Fluidleitung (1) durch die ersten und zweiten Ventile (V1,V2) gebildet sind.

13. Vorrichtung nach Anspruch 11, dadurch gekennzeichnet, daß der erste Leitungsweg durch einen zum ersten Ventil (V1) parallel verlaufenden ersten Beipaß und der zweite Leitungsweg durch einen zum zweiten Ventil (V2) parallel verlaufenden zweiten Beipaß gebildet ist und die ersten und zweiten Beipässe jeweils ein Hilfsventil (VH1 bzw. VH2) enthalten, wobei das Hilfsventil jeweils eines der ersten und zweiten Öffnungs- und Schliemittel bildet.

14. Vorrichtung nach Anspruch 13, dadurch gekennzeichnet, daß in jedem der beiden Beipässe eine Drossel (D1 bzw. D2) in Reihe mit dem zugehörigen Hilfsventil (VH1 bzw. VH2) angeordnet ist.

15. Vorrichtung nach einem der Ansprüche 11 bis 14, dadurch gekennzeichnet, daß die Vergleichsmittel einen Differenzdruckgeber (5) mit einstellbarer Druckdifferenzschwelle enthalten.

16. Vorrichtung nach Anspruch 15, dadurch gekennzeichnet, daß ein magnetfeldabhängiger Sensor (6) mit dem Differenzdruckgeber (5) und den Entscheidungs- und Schaltmitteln (15) gekop pelt ist, um bei jedem Erreichen oder Überschreiten der Druckdifferenzschwelle (ps) ein Schaltsignal an die Entscheidungsund Schaltmittel anzulegen.

**Claims**

1. A method of testing the tightnesses of two valves (V1, V2) disposed successively in a fluid line (1) a pressure gradient being built up in said fluid line so that a first one (V1) of said two valves becomes an upstream valve and a second one (V2) of said two valves becomes a downstream valve, said two valves being closed and the pressure condition in the line portion (4) between said two valves being determined, characterized in that a limit pressure in the range between the pressure upstream of said first valve and the pressure downstream of said second valve is preset, the pressure in the line portion between said two valves is compared with said limit pressure, said first valve is taken to be substantially tight if after a holding time ($t_w$) the pressure determined is below said limit pressure or said second valve is taken to be substantially tight if after said holding time the pressure so determined is above said limit pressure, a passageway is opened across said valve so taken to be sufficiently tight to allow the pressure in said line portion to change, the pressure in said line portion is determined and compared with said limit pressure, judging the valve still to be tested to be sufficiently tight if, during a measuring time interval ($t_M$) commencing upon the opening of said passageway, the pressure reaches or passes said limit pressure once.

2. A method according to claim 1 characterized in that said limit pressure is preset with reference to the fluid pressure upstream of said first valve.

3. A method according to claim 1 or 2 characterized in that during said opening of said passageway, fluid is permitted to pass at such a high flow rate that the pressure in said line portion passes said limit pressure during a relatively short initial period of said measuring time interval and the tightness of the valve still to be tested is judged in response to whether or not the pressure in said line portion reaches said limit pressure a second time during said measuring time interval.

4. A method according to claim 3 characterized in that said passageway is through said fluid line and is opened and closed by actuating the valve taken to be tight.

5. A method according to any one of claims 1 through 3 characterized in that said passageway across said valve taken to be tight is through an associated bypass line said bypass line having a secondary valve.

6. A method according to claim 5 characterized in that said passageway is opened so as to permit fluid to pass at a limited rate of flow upon the commencement of said measuring time interval and kept open throughout said measuring time interval.

7. A method according to claim 6 characterized in that said rate of flow is limited by restricting flow through said bypass lines having said secondary valves and bypassing said first and said second valves.

8. A method according to any one of claims 1 through 7 characterized in that a switching signal is generated by a limit pressure transmitter each time when said limit pressure is reached, each such limit pressure signal is transmitted to an arbitration logic and counted and an alarm signal is generated if the number of switching signals counted until the end of said measuring time interval is not equal to unity.

9. A method according to claim 8 characterized in that at least one of the holding time and the measuring time interval is preset by a timer and said timer generates at the end of said holding time and measuring time interval a switching signal enabling said arbitration logic.

10. A method according to any one of claims 1 through 9 characterized in that said measuring time interval is preset in response to the sizes and/or the throughputs of the valves to be tested.

11. A device for testing the tightnesses of two valves (V1, V2) disposed successively in a fluid line (1), said fluid line comprising a line upstream of a first valve (V1), a line portion (4) between said first valve and a second valve and a line downstream of said second valve (V2), said device being provided with first means (V1 ;VH1) for opening and closing a first passageway between said upstream line and said line portion (4), second means (V2 ; VH2) for opening and closing a second passageway between said line portion (4) and said downstream line, means (15, 11, 12) for actuating said opening and closing means and means for sensing the pressure (pz) in said line portion (4) characterized by means for sensing the pressure (pe) in said upstream line, means (5) for comparing the pressure determined in said upstream line and the pressure determined in said line portion and for generating at least one signal upon reaching a predetermined difference between said two pressures, said comparing means being coupled with said sensing means, timing means (14) to define at least one measuring time interval ($t_m$) following a holding time ($t_w$) and arbitration and switching means (6, 15) for selectively actuating one of said two actuating means at the end of said holding time (tw) in response to said signal from said comparing means (5) and for generating at least one output representative of the result of the test, said arbitration and switching means being coupled with said comparing means (5), said timing means (14) and said actuating means (11, 12).

12. A device according to claim 11 characterized in that said first and second passageways are through said first and second valves (V1, V2) in said fluid line (1).

13. A device according to claim 11 characterized in that said first passageway is through a first bypass line bypassing said first valve (V1) and said second passageway is through a second bypass line bypassing said second valve (V2) and said first and said second bypass line each have a secondary valve (VH1 and VH2, respectively), each such secondary valve being one of said first and second opening and closing means.

14. A device according to claim 13 characterized in that a flow restricting device (D1 and D2, respectively) is arranged in each bypass line in series with the secondary valve (VH1 and VH2, respectively).

15. An apparatus according to any one of claims 11 through 14 characterized in that said comparing means comprises a pressure difference transmitter (5) allowing to preset said limit pressure difference.

16. A device according to claim 15 characterized in that a magnetic field dependent detecting device (6) is coupled with said pressure difference transmitter (5) and said arbitration and switching means (15) to generate a switching signal for input into said arbitration and switching means each time when said limit pressure difference (ps) is reached or exceeded.

## Revendications

1. Méthode pour le contrôle de l'étanchéité de deux robinets($V_1$, $V_2$) disposés successivement sur une conduite de fluide (1), un gradient de pression s'établissant dans la conduite de fluide de la sorte que le premier robinet ($V_1$) est le robinet amont et le deuxième robinet ($V_2$) est le robinet aval, les deux robinets étant fermés et la pression dans le tronçon (4) entre les deux robinets déterminé, caracterisé par le fait qu'un seuil de pression est pré-réglé, ledit seuil se trouvant à l'intérieure d'une plage de pression entre la pression en amont du premier robinet et la pression en aval du deuxième robinet, que la pression dans le tronçon entre les deux robinets est comparée avec ledit seuil de pression, que le premier robinet est jugé comme étant substantiellement étanche, si la pression relévée après l'écoulement d'un temps de maintien ($t_w$) se trouve en dessous dudit seuil de pression ou que le deuxième robinet est jugé comme étant suffisamment étanche, si la pression relévée après l'écoulement dudit temps de maintien se trouve en dessus dudit seuil de pression, qu'un conduit de passage est ouvert à travers le robinet étant jugé étanche de la sorte que la pression dans ledit tronçon peut varier et que la pression dans ledit tronçon est déterminée et comparée avec ledit seuil de pression, le robinet encore à contrôler étant jugé comme étant suffisamment étanche, si la pression atteint ou dépasse, au cours d'un intervalle de mesure ($t_m$) commençant avec l'ouverture dudit conduit de passage, ledit seuil de pression une fois.

2. Méthode selon la revendication 1, caractérisée par le fait que le seuil de pression est reglé en fonction de la pression en amont du premier robinet.

3. Méthode selon l'une quelconque des revendications 1 ou 2, caractérisée par le fait que, lors de l'ouverture du conduit de passage, le fluide peut passer à un tel débit que la pression dans ledit tronçon dépasse déjà après une phase initiale relativement courte de l'intervalle de mésure le seuil de pression, et que le taux d'étanchéité du robinet à contrôler est jugé en fonction du fait si, à l'intérieur de l'intervalle de mésure, la pression dans le tronçon atteint le seuil de pression une deuxième fois.

4. Méthode selon la revendication 3, caracterisée par le fait que ledit conduit de passage passe par la conduite de fluide et qu'il est ouvert ou fermé par l'actionnement du robinet jugé comme étant étanche.

5. Méthode selon l'une quelconque des revendications 1 à 3, caractérisées par le fait que ledit conduit de passage est ouvert à travers du robinet jugé comme étant étanche à l'aide d'un bipasse muni d'un robinet auxiliaire.

6. Méthode selon la revendication 5, caracterisée par le fait que le conduit de passage est ouvert au début de l'intervalle de mésure en admettant un débit limité et que ledit conduit de passage reste ouvert pendant toute l'intervalle de mésure.

7. Méthode selon la revendication 6, caractérisée par le fait que le débit du fluide est limité en limitant le débit dans les bipasses du premier et du deuxième robinet munisdesdits robinets auxiliaires.

8. Méthode selon l'une quelconque des revendications 1 à 7, caractérisée par le fait que, chaque fois que le seuil de pression est atteint, un signal est généré par un émetteur, que chaque signal est transmis à un élement logique et compté et qu'un signal d'alarme est généré, si le nombre de signaux de seuil de pression à la fin de l'intervalle de mésure n'égale pas un.

9. Méthode selon la revendication 8, caracterisée par le fait qu'au moins l'un quelconque du temps de maintien ou de l'intervalle de mésure est réglé dans une horloge et que l'horloge émet à la fin du temps de maintien et de l'intervalle de mésure une impulsion pour actionner l'élément logique.

10. Méthode selon l'une quelconque des revendications 1 à 9, caractérisée par le fait que l'intervalle de mésure est réglé en fonction de la dimension et/ou du débit des robinets à contrôler.

11. Dispositif pour le contrôle de l'étanchéité de deux robinets ($V_1$, $V_2$) disposés successivement sur une conduite de fluide (1), ladite conduite de fluide comprenant un tronçon en amont d'un premier robinet ($V_1$), un tronçon (4) entre le premier et le deuxième robinet et un tronçon en aval du deuxième robinet ($V_2$), et disposant de premiers moyens ($V_1$, $VH_1$) pour l'ouverture et la fermeture d'un premier conduit de passage entre le tronçon amont et ledit tronçon (4), de deuxièmes moyens ($V_2$, $VH_2$) pour l'ouverture et la fermeture d'un deuxième conduit de passage entre ledit tronçon (4) et le tronçon aval, des moyens (15, 11, 12) pour actionner lesdits moyens d'ouverture et de fermeture et des moyens pour capter la pression ($pz$) à l'intérieure dudit tronçon (4), caractérisé par des moyens pour capter la pression ($pe$) dans le tronçon amont, des moyens (5) pour comparer les deux pressions relevées sur le tronçon amont et à l'intérieure dudit tronçon (4) et pour générer au moins un signal si le seuil de différence de pression pré-réglé entre les deux pressions est atteint, les moyens de comparaison étant connectés aux capteurs, des moyens de comptage horaire (14) pour la définition d'au moins un intervalle de mesure ($t_m$) suivant un temps de maintien ($t_w$), et des moyens d'arbitrage et d'actionnement (6, 15) pour l'actionnement sélectif d'un des deux moyens d'actionnement à la fin du temps demaintien ($tw$) en fonction dudit signal des moyens de comparaison (5) et pour la génération d'au moins une donnée de sortie représentative du résultat de contrôle, lesdits moyens d'arbitrage et d'actionnement étant liés aux moyens de comparaison (5), aux moyens de comptage horaire (14)et aux moyens d'actionnement (11, 12).

12. Dispositif selon la revendication 11, caractérisé par le fait que le premier et le deuxième conduit de passage dans la conduite de fluide (1) sont formés par le premier et le deuxième robinet ($V_1$, $V_2$).

13. Dispositif selon la revendication 11, caractérisé par le fait que le premier conduit de passage est formé par un premier bipasse parallèle au premier robinet ($V_1$) et le deuxième conduit de passage par un deuxième bipasse parallèle au deuxième robinet ($V_2$) et que le premier et le deuxième bipasse sont munis chacun d'un robinet auxiliaire ($VH_1$ resp. $VH_2$), chacun des robinets auxiliaires étant un des premiers et de deuxièmes moyens d'ouverture et de fermeture.

14. Dispositif selon la revendication 13, caractérisé par le fait que chacun des deux bipasses est munis d'un robinet d'étranglement ($D_1$ resp. $D_2$) monté en série avec le robinet auxiliaire correspondant ($VH_1$ resp. $VH_2$).

15. Dispositif selon l'une quelconque des revendications 11 à 14, caractérisé par le fait que les moyens de comparaison comprennent un émetteur de pression différentielle (5)à seuil de pression differentielle réglable.

16. Dispositif selon la revendication 15, caractérisé par le fait qu'un capteur dépendant d'un champs magnétique (6) est lié à l'émetteur de pression différentielle (5) et les moyens d'arbitrage et d'actionnement (15), afin de générer un signal d'actionnement aux moyens d'arbitrage et d'actionnement lorsque le seuil de différence de pression ($ps$) est atteint au dépassé.

Fig.1

Fig.1 A

Fig.1 B

Fig. 2

Fig. 2 A

Fig. 2 B

**Fig. 3**

STEUERGERÄT

**Fig. 3A**

**Fig. 3B**

Fig. 4

STEUERGERÄT

Fig. 4A

Fig. 4B